(19) Europäisches Patentamt
European Patent Office
Office européen des brevets

(11) **EP 2 181 014 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(21) Anmeldenummer: **08786994.7**

(22) Anmeldetag: **07.08.2008**

(51) Int Cl.:
*B60K 35/00* (2006.01)     *B60K 37/02* (2006.01)
*G02B 27/22* (2006.01)

(86) Internationale Anmeldenummer:
**PCT/EP2008/060397**

(87) Internationale Veröffentlichungsnummer:
**WO 2009/024474 (26.02.2009 Gazette 2009/09)**

(54) **VERFAHREN ZUM ANZEIGEN VON INFORMATIONEN IN EINEM KRAFTFAHRZEUG UND ANZEIGEEINRICHTUNG FÜR EIN KRAFTFAHRZEUG**

METHOD FOR DISPLAYING INFORMATION IN A MOTOR VEHICLE AND DISPLAY DEVICE FOR A MOTOR VEHICLE

PROCÉDÉ POUR AFFICHER DES INFORMATIONS DANS UN VÉHICULE AUTOMOBILE, ET DISPOSITIF D'AFFICHAGE POUR UN VÉHICULE AUTOMOBILE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.08.2007 DE 102007039444**

(43) Veröffentlichungstag der Anmeldung:
**05.05.2010 Patentblatt 2010/18**

(73) Patentinhaber: **Volkswagen AG
38436 Wolfsburg (DE)**

(72) Erfinder:
• **DEHMANN, Rainer
10961 Berlin (DE)**
• **KUHN, Mathias
14129 Berlin (DE)**

(74) Vertreter: **Reitstötter - Kinzebach
Patentanwälte
Sternwartstrasse 4
81679 München (DE)**

(56) Entgegenhaltungen:
**EP-A- 1 052 566     WO-A-2005/091122
WO-A-2006/108617**

**Beschreibung**

Die vorliegende Erfindung betrifft eine Verfahren zum Anzeigen von Informationen in einem Kraftfahrzeug, bei dem zumindest ein flächiges Objekt mittels eines in dem Kraftfahrzeug befestigten Displays grafisch dargestellt wird, wobei das grafische Objekt ein Anzeigefeld und ein Bedienfeld umfasst. Ferner betrifft die Erfindung eine Anzeigeeinrichtung für ein Kraftfahrzeug mit einem Display zur grafischen Darstellung von Informationen, einer Benutzerschnittstelleneinrichtung, mit welcher zumindest ein auf dem Display darstellbares grafisches Objekt erzeugbar ist, wobei das grafische Objekt ein Anzeigefeld und ein Bedienfeld umfasst und einer mit der Benutzerschnittstelleneinrichtung gekoppelten Eingabeeinrichtung.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

In der DE 100 01 988 A1 ist beispielsweise ein Kombiinstrument zur Anzeige von betriebs- und/oder verkehrsbezogenen Daten beschrieben. Um das vielfältige Informationsangebot besser aufnehmen zu können, wird in der DE 103 03 792 A1 eine perspektivische Darstellung dreidimensionaler Elemente vorgeschlagen.

Als weitere Anzeigeeinrichtung besitzt ein Fahrzeug häufig eine Multifunktionsanzeige in der Mittelkonsole oder oberhalb der Mittelkonsole. Ein solches Multifunktionsbedienelement ist beispielsweise in der DE 199 41 955 A1 beschrieben.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Werden solche Menüstrukturen in einem Kraftfahrzeug eingesetzt, ergibt sich das Problem, dass die Navigation innerhalb dieser Menüstrukturen und die Aufnahme der von dem Display angezeigten Informationen die Aufmerksamkeit des Fahrers derart beanspruchen, dass das gleichzeitige sichere Führen des Kraftfahrzeugs durch den Fahrer nicht mehr möglich ist. Will somit der Fahrer Einrichtungen des Fahrzeugs, deren Informationen über die Anzeigeeinrichtung dargestellt werden, bedienen, sollte er dies vor dem Beginn einer Fahrt tun oder die Fahrt für die Bedienung unterbrechen. Derartige Beeinträchtigungen für die Bedienung sind jedoch unerwünscht. Sie führen vielfach dazu, dass der Fahrer die Einrichtungen des Fahrzeugs während der Fahrt bedient, obwohl dies zu einer Ablenkung führt, die ein Sicherheitsrisiko darstellen kann.

Es ist daher wünschenswert, die Informationen im Kraftfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann, selbst wenn von der Anzeigeeinrichtung gegebenenfalls komplexe hierarchische Strukturen darstellbar sind. Die Informationsdarstellung und die mit einer Informationsdarstellung verbundene Bedienung in dem Kraftfahrzeug trägt somit zur Sicherheit beim Führen des Kraftfahrzeugs bei.

Schließlich ist in der WO 2006/108617 A2 ein Verfahren zur Darstellung von Informationen in einem Verkehrsmittel beschrieben, bei dem die Informationen in Form von hierarchischen Menüstrukturen dargestellt werden. Außerdem ist eine Vorrichtung zur Darstellung von Informationen mit einer Steuereinheit und einer Anzeigeeinheit zur stereoskopischen Darstellung von Informationen beschrieben sowie ein entsprechendes Kombiinstrument für ein Kraftfahrzeug. Bei der stereoskopischen Darstellung werden zumindest zwei verschiedene Menüs oder Menüpunkte für den Betrachter in verschiedenen Entfernungen dargestellt.

Es ist die Aufgabe der vorliegenden Erfindung, ein Verfahren und eine Anzeigeeinrichtung der eingangs genannten Art bereitzustellen, bei denen die dargestellte Information so schnell und intuitiv wie möglich erfassbar ist und die eine schnelle, intuitive und einfache Bedienung von Fahrzeugeinrichtungen ermöglichen, deren Informationen dargestellt werden.

Erfindungsgemäß wird diese Aufgabe durch ein Verfahren mit den Merkmalen des Anspruchs 1 und eine Anzeigeeinrichtung mit den Merkmalen des Anspruchs 10 gelöst. Vorteilhafte Aus- und Weiterbildungen ergeben sich aus den Unteransprüchen.

Das erfindungsgemäße Verfahren ist dadurch gekennzeichnet, dass von einer Benutzerschnittstelleneinrichtung Grafikdaten erzeugt werden, die das Display so ansteuern, dass das Anzeigefeld auf einer Seite des flächigen grafischen Objekts und das Bedienfeld auf der anderen Seite des flächigen grafischen Objekts dargestellt werden, und dass auf eine Eingabe mittels einer Eingabeeinrichtung eine Recheneinheit der Benutzerschnittstelleneinrichtung die Grafikdaten so verändert, dass sich das grafische Objekt bei der perspektivischen Darstellung auf dem Display von einer Seite zu der anderen Seite dreht. Das flächige Objekt weist insbesondere eine Vorderseite und eine Rückseite auf, auf denen das Bedienfeld bzw. das Anzeigefeld dargestellt werden.

In einem Kraftfahrzeug sollen den Fahrzeuginsassen und insbesondere dem Fahrer vielfältige Informationen angezeigt werden. Diese Informationen umfassen insbesondere den Betrieb des Fahrzeugs betreffende Informationen. Ferner umfassen diese Informationen Anzeigen, die den vielfältigen im Fahrzeug untergebrachten Einrichtungen zugeordnet sind. Gleichermaßen soll die Informationsanzeige jedoch auch die Bedienung der Einrichtungen des Fahrzeugs unterstützen. Hierfür wirkt die Anzeige auf dem Display mit einer Eingabeeinrichtung zusammen. Das Display visualisiert die über die Eingabeeinrichtung vorgenommenen Bedienschritte und zeigt ferner die möglichen Bedienschritte an. Beim Anzeigen von Informationen in einem Kraftfahrzeug ist daher zwischen den Anzeigeinhalten, welche der eigentlichen Informationsdarstellung dienen, und den Anzeigeinhalten, welche die Bedienung von Einrichtungen des Kraftfahrzeugs betreffen, zu unterscheiden.

Herkömmlicherweise weist die Informationsanzeige in einem Kraftfahrzeug die beiden Anzeigeinhalte gemeinsam in verschiedenen Bereichen des Displays auf. Gemäß der vorliegenden Erfindung werden die Anzeigeinhalte, welche die reine Informationswiedergabe, die nicht mit Bedienschritten in Zusammenhang steht, in einem Anzeigefeld eines grafischen Objekts dargestellt und getrennt hiervon, die Anzeigeinhalte, welche die Visualisierung von Bedienschritten umfassen, in einem Bedienfeld dargestellt. Diese Trennung der Informationsinhalte erleichtert es dem Betrachter, die dargestellte Information schnell und intuitiv aufzunehmen, so dass hierdurch die Sicherheit beim Führen des Fahrzeugs erhöht wird, da der Fahrer in geringerem Maße durch die Aufnahme der angezeigten Information vom Führen des Fahrzeugs abgelenkt wird.

Erfindungsgemäß wird die Trennung des Anzeigefelds und des Bedienfelds des grafischen Objekts ferner dadurch für den Betrachter visualisiert, dass die beiden Felder auf verschiedenen Seiten eines flächigen grafischen Objekts dargestellt werden, und der Betrachter mittels einer Eingabe die perspektivische Darstellung des grafischen Objekts auf dem Display von einer Seite zu der anderen Seite drehen kann und so von dem Anzeigefeld zu dem Bedienfeld und umgekehrt gelangen kann.

In dem Anzeigefeld des grafischen Objekts werden insbesondere Informationen von Fahrerassistenzsystemen dargestellt werden.

Gemäß einer bevorzugten Ausgestaltung des erfindungsgemäßen Verfahrens erzeugt die Recheneinheit der Benutzerschnittstelleneinrichtung Grafikdaten für aufeinander folgende Zwischenbilder zur Darstellung der Drehung, wobei die Drehung in eine erste Phase, bei der Bildpunkte des grafischen Objekts beschleunigt bewegt werden, und eine zweite Phase, bei der Bildpunkte des grafischen Objekts abgebremst bewegt werden, unterteilt wird. Dabei entspricht die erste Phase z. B. einem Drehwinkel des grafischen Objekts von 0° bis 90° und die zweite Phase einem Drehwinkel des grafischen Objekts von 90° bis 180°. Die Achse der Drehung liegt insbesondere innerhalb des grafischen Objekts. Bevorzugt ist die Achse in Richtung der Höhe des Displays ausgerichtet. Ferner ist die Achse bevorzugt mittig in dem grafischen Objekt angeordnet.

Unter einer beschleunigten Bewegung wird hier eine positive Beschleunigung verstanden, bei der sich die Geschwindigkeit erhöht, und unter einer abgebremsten Bewegung wird eine negative Beschleunigung verstanden, bei der sich die Geschwindigkeit erniedrigt.

Bei dem erfindungsgemäßen Verfahren ist die Art und Weise, wie die Objekte gedreht werden, von besonderer Bedeutung. Von der Darstellung dieser Drehung hängt es nämlich ab, wie gut und wie schnell sich der Betrachter in den Objekten orientieren kann, auch wenn sie gedreht worden sind. Dabei hat sich herausgestellt, dass viele Animationstechniken, die außerhalb des Kraftfahrzeugs bei der veränderlichen grafischen Darstellung von Objekten eingesetzt werden, für die Verwendung im Kraftfahrzeug ungeeignet sind, da im Kraftfahrzeug der Betrachter das Display nur für kurze Augenblicke betrachtet. Der zeitliche Verlauf der Veränderung einer Position eines grafisch dargestellten Objekts ist daher auch für die Sicherheit beim Führen des Fahrzeugs von besonderer Bedeutung.

Gemäß einer bevorzugten Weiterbildung des erfindungsgemäßen Verfahrens werden bei der Berechnung der Grafikdaten für aufeinander folgende Zwischenbilder zur Darstellung der Drehung die aufeinander folgenden Positionen x der Bildpunkte des grafischen Objekts in der ersten Phase folgende Rechenschritte durchgeführt:

3

$$\text{(i)} \qquad n = \frac{t - t_0}{d_1} \qquad ;$$

$$\text{(ii)} \qquad x = b_1 + c_1 \cdot n^4 \qquad ,$$

wobei

t eine Systemzeit ist, zu der die erzeugten Grafikdaten auf dem Display dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts ist,
$c_1$ die gesamte Verschiebung des Bildpunkts des grafischen Objekts in der ersten Phase ist und wobei die Schritte (i) und (ii) so oft wiederholt werden, bis gilt, dass: $t > (t_0 + d_1)$.

Des Weiteren werden bei der Berechnung der Grafikdaten für aufeinander folgende Zwischenbilder zur Darstellung der Drehung, die aufeinander folgenden Positionen x der Bildpunkte des Objekts, in der zweiten Phase folgende Rechenschritte durchgeführt:

$$\text{(i)} \qquad n = \frac{t - t_0}{d_1} - 1 \qquad ;$$

$$\text{(ii)} \qquad x = b_2 + c_2 \cdot (1 - n^4) \qquad ,$$

wobei

t eine Systemzeit ist, zu der die erzeugten Grafikdaten auf dem Display dargestellt werden, wobei zu Beginn der Drehung der zweiten Phase $t = t_0$ ist,
$d_2$ die Dauer der zweiten Phase ist,
$b_2$ die Ausgangsposition des Bildpunkts des Objekts ist,
$c_2$ die Gesamtverschiebung des Bildpunkts des Objekts in der zweiten Phase ist und wobei die Schritte (i) und (ii) von der Recheneinheit so oft wiederholt werden, bis gilt: $t > (t_0 + d_2)$.

Des Weiteren ist die Dauer der Gesamtdrehung von besonderer Bedeutung für Erfassbarkeit der dargestellten Information. Bei dem erfindungsgemäßen Verfahren ist die Dauer der Gesamtdrehung in einem Bereich von 0,5 Sekunden bis 2 Sekunden, bevorzugt in einem Bereich von 1 Sekunde bis 1,5 Sekunden. Die Dauer der Drehung der ersten Phase ist insbesondere in einem Bereich von 0,25 Sekunden bis 1 Sekunde und bevorzugt in einem Bereich von 0,5 Sekunden bis 0,75 Sekunden. Ferner ist die Dauer der Drehung der zweiten Phase in einem Bereich von 0,25 Sekunden bis 1 Sekunde, bevorzugt in einem Bereich von 0,5 Sekunden bis 0,75 Sekunden. Es ist ferner bevorzugt, dass die Dauer der Drehung der ersten Phase der Dauer der Drehung der zweiten Phase entspricht.
Gemäß einer bevorzugten Weiterbildung des erfindungsgemäßen Verfahrens wird die Geschwindigkeit des Kraftfahrzeugs gemessen und die Dauer der Gesamtdrehung bzw. die Dauer der Drehung der ersten und/oder zweiten Phase in Abhängigkeit von der Geschwindigkeit des Kraftfahrzeugs ermittelt. Bevorzugt ist die Dauer der Drehung umso länger, je höher die Geschwindigkeit des Kraftfahrzeugs ist. Bei höheren Geschwindigkeiten kann der Fahrer nämlich seinen Blick nur für kürzere Zeitintervalle auf das Display richten. Ferner ist der Abstand der Zeitintervalle, in denen der Fahrer seinen Blick auf das Display richtet, größer, da der Fahrer bei höheren Geschwindigkeiten seine Aufmerksamkeit stärker auf das Fahrgeschehen richten muss. Die Koppelung der Drehdauer des flächigen Objekts an die Geschwindigkeit des Kraftfahrzeugs stellt somit sicher, das der Fahrer bei höheren Geschwindigkeiten die Orientierung in der Informationsdarstellung behält und die Informationsinhalte auf diese Weise einfach, schnell und intuitiv erfassen kann.

Das Bedienfeld, welches auf einer Seite des flächigen Objekts dargestellt wird, umfasst insbesondere Schaltflächen, über die mittels der Eingabeeinrichtung Eingaben erfolgen können.

Gemäß einer bevorzugten Ausgestaltung des erfindungsgemäßen Verfahrens erfolgt die Eingabe durch eine Berührung des Displays. Gemäß einer anderen Ausgestaltung erfolgt die Eingabe durch eine Geste eines Körperteils eines Nutzers, welche vor dem Display ausgeführt wird. Die Geste wird von der Eingabeeinrichtung oder einer anderen nachgeschalteten Einrichtung erfasst und ausgewertet. Die Geste des Körperteils des Nutzers kann beispielsweise durch eine kapazitive Koppelung zwischen dem Körperteil und einer Empfangseinrichtung erfasst werden. Ferner kann die Geste des Körperteils des Nutzers durch eine Emission von Infrarotstrahlung und eine Reflektion dieser Infrarotstrahlung an dem Körperteil des Nutzers erfasst werden.

Die erfindungsgemäße Anzeigeeinrichtung ist dadurch gekennzeichnet, dass von der Benutzerschnittstelleneinrichtung Grafikdaten erzeugbar sind, die das Display so ansteuern, dass das Anzeigefeld auf einer Seite des flächigen grafischen Objekts und das Bedienfeld auf der anderen Seite des flächigen grafischen Objekts dargestellt sind, und dass die Benutzerschnittstelleneinrichtung eine Recheneinrichtung umfasst, mit welcher in Abhängigkeit von einer Eingabe mittels der Eingabeeinrichtung die Grafikdaten so veränderbar sind, dass sich das flächige grafische Objekt von der perspektivischen Darstellung auf dem Display von einer Seite zu der anderen Seite dreht.

Mit der Recheneinheit der Benutzerschnittstelleneinrichtung sind insbesondere Grafikdaten für aufeinander folgende Zwischenbilder zur Darstellung der Drehung erzeugbar, wobei die Drehung in eine erste Phase, bei der Bildpunkte des grafischen Objekts beschleunigt bewegt werden, und eine zweite Phase, bei der Bildpunkte des grafischen Objekts abgebremst bewegt werden, unterteilt ist.

Bei der Berechnung der Grafikdaten für aufeinander folgende Zwischenbilder in der ersten bzw. zweiten Phase sind von der Recheneinheit insbesondere die vorstehend angegebenen Rechenschritte für die erste bzw. zweite Phase durchführbar. Auch die Dauer für die Drehung für die erste bzw. zweite Phase ist insbesondere innerhalb der vorstehend genannten Bereiche.

Gemäß einer bevorzugten Weiterbildung der erfindungsgemäßen Anzeigeeinrichtung umfasst die Anzeigeeinrichtung eine Schnittstelle zum Empfang von Daten für die Geschwindigkeit des Kraftfahrzeugs. Mit der Recheneinheit ist in diesem Fall in Abhängigkeit von diesen Geschwindigkeitsdaten die Dauer der Gesamtdrehung bzw. die Dauer der Drehung der ersten und/oder zweiten Phase ermittelbar.

Bei der Eingabeeinrichtung kann es sich um eine berührungsempfindliche Oberfläche eines Displays handeln. Bevorzugt ist die Eingabeeinrichtung eine Einrichtung zum Erfassen und Auswerten einer Geste eines Körperteils eines Nutzers, welche vor dem Display ausgeführt wird. Hierfür kann die Eingabeeinrichtung insbesondere eine Empfangseinrichtung umfassen, an die ein Signal von dem Körperteil des Nutzers kapazitiv übertragbar ist, wenn sich der Körperteil in der Nähe der Empfangseinrichtung befindet. Mittels dieser kapazitiven Koppelung kann die Position des Körperteils detektiert werden.

Aus der zeitlichen Veränderung dieser Position kann auf eine Geste des Nutzers geschlossen werden.

Ferner kann gemäß einer anderen Ausgestaltung die Eingabeeinrichtung eine Infrarotlichtquelle oder einen Empfänger für reflektiertes Infrarotlicht zum Erfassen der Geste des Körperteils des Nutzers umfassen. Auch in diesem Fall wird die Position des Körperteils und deren zeitliche Veränderung erfasst und als Geste interpretiert.

Vorzugsweise ist die Benutzerschnittstelleneinrichtung mit einem Fahrerassistenzsystem gekoppelt. Die Grafikdaten sind in diesem Fall von der Benutzerschnittstelleneinrichtung so erzeugbar, dass im Anzeigefeld des grafischen Objekts Informationen des Fahrerassistenzsystems darstellbar sind.

Schließlich betrifft die Erfindung ein Kraftfahrzeug mit der vorstehend beschriebenen Anzeigeeinrichtung.

Die Erfindung wird nun an Hand eines Ausführungsbeispiels mit Bezug zu den Zeichnungen erläutert.

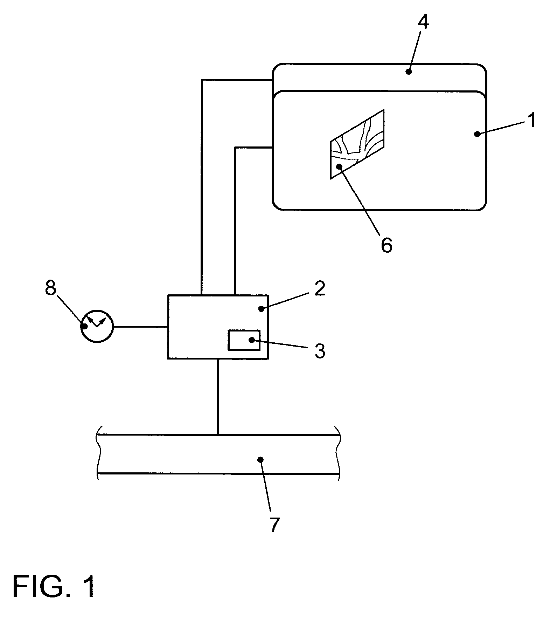

Figur 1    zeigt schematisch ein Ausführungsbeispiel der erfindungsgemäßen An- zeigeeinrichtung und die Verbindung dieser Anzeigeeinrichtung mit ande- ren Einrichtungen des Kraftfahrzeugs,

Figur 2    zeigt eine von einem Ausführungsbeispiel des erfindungsgemäßen Ver- fahrens erzeugte Anzeige des Displays für das Anzeigefeld des grafischen Objekts,

Figur 3    zeigt eine von einem Ausführungsbeispiel des erfindungsgemäßen Ver- fahrens erzeugte Anzeige des Displays für das Bedienfeld des grafischen Objekts und

Figur 4    zeigt den zeitlichen Verlauf eines Bildpunkts des grafischen Objekts bei einer Drehung von der in Figur 2 gezeigten Anzeige des Displays zu der in Figur 3 gezeigten Anzeige des Displays.

Die Anzeigeeinrichtung umfasst ein Display 1 zur grafischen Darstellung von Informationen. Bei dem Display 1 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 7 ist eine (nicht gezeigte) Hintergrundbeleuchtung zugeordnet, die durch eine oder mehrere lichtemittierende Dioden bereitgestellt werden kann. Das Display 1 ist frei programmierbar, d. h. es lassen sich beliebige Grafikdaten erzeugen, welche auf dem Display 1 dargestellt werden.

Das Display 1 ist insbesondere in einem Bereich des Fahrzeugs befestigt, der zumindest für den Fahrer gut sichtbar ist. Ist die Bedienung der Einrichtungen des Fahrzeugs direkt mit der Anordnung des Displays gekoppelt, so dass der Benutzer z. B. seine Hand oder seinen Finger zumindest in die Nähe des Displays 1 bringen muss, um Eingaben vorzunehmen, ist das Display 1 so angeordnet, dass es der Fahrer des Fahrzeugs leicht mit seiner Hand oder seinem Finger erreichen kann. Beispielsweise kann das Display 1 in der Mittelkonsole des Fahrzeugs untergebracht sein.

Das Display 1 ist mit einer Benutzerschnittstelleneinrichtung 2 verbunden, mit welcher Grafikdaten für auf dem Display 1 darstellbare grafische Objekte erzeugbar sind. Ferner ist die Benutzerschnittstelleneinrichtung 2 mit einer Eingabeeinrichtung 4 verbunden, über welche der Benutzer Einrichtungen des Fahrzeugs, deren Informationen auf dem Display 1 angezeigt werden, steuern kann.

Bei der Eingabeeinrichtung 4 kann es sich beispielsweise um eine Einrichtung zum Erfassen und Auswerten einer Geste eines Körperteils eines Nutzers handeln. Beispielsweise kann die Hand des Benutzers vor dem Display 1 die Geste ausführen. Dabei wird die dreidimensionale Position der Hand in einem bestimmten Aufenthaltsbereich vor dem Display 1 erfasst, ohne dass es erforderlich ist, dass das Display 1 berührt wird. Der zugelassene Aufenthaltsbereich hängt von der Anordnung des Displays 1 in dem Kraftfahrzeug ab. Der Bereich sollte so gewählt sein, dass der Aufenthalt der Hand eines Benutzers, in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor dem Display 1 liegen. Wird die Hand des Benutzers näher als dieser Schwellwert an das Display 1 heranbewegt, wird dies von der Eingabeeinrichtung 4 erkannt und die Annäherung wird als Bedienabsicht interpretiert. Dies kann z. B. dazu führen, dass die von dem Display 1 angezeigten Objekte anders dargestellt werden. Ferner kann dies als Eingabe interpretiert werden, welche zu einer Drehung des grafischen Objekts führt, wie es später im Detail erläutert wird. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektiert Infrarotlicht detektieren. Details einer solchen Eingabeeinrichtung sind in der DE 100 58 244 C2 beschrieben. Weitere Eingabeeinrichtungen, die in Verbindung mit der Anzeigeeinrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine lichtemittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere lichtemittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu Null ergänzt. Ändert sich die Position des Objekts, ändert sich auch der Lichtanteil, welcher von der ersten lichtemittierenden Diode zur Fotodiode über die Reflexion an dem Objekt gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung eine berührungsempfindliche Folie sein, die auf dem Display 1 vorgesehen ist. Mit der Folie kann die Position einer Berührung des hinter der Folie angeordneten Displays 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf dem Display 1 angezeigten grafischen Objekt zugeordnet werden. Des Weiteren können Gleitbewegungen des Fingers über die Folie interpretiert werden. Insbesondere kann der Benutzer auf diese Weise eine Linie auf dem Display 1 definieren, indem er an einem Punkt die Folie berührt, zu einem anderen Punkt hin auf der Folie gleitet und den Finger bei dem anderen Punkt von der Folie wegnimmt.

Schließlich kann als Eingabeeinrichtungen ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf dem Display angezeigte Objekte ansteuerbar und durch Drücken des Drehschalters auswählbar sind. Ferner kann durch den Drehschalter auch direkt ein Drehwinkel eingegeben werden, wie es später erläutert wird. Zusätzlich können um den Drehschalter herum separate Druckschalter angeordnet sein, wobei die Anordnung von Anzeigefeldern auf dem Display, die den Druckschaltern zugeordnet sind, zumindest schematisch der Anordnung der Druckschalter entspricht. Das erfindungsgemäße Informationssystem kann beispielsweise eine Multifunktionsbedienvorrichtung umfassen, wie sie in der EP 1 212 208 B1 beschrieben ist.

Die Benutzerschnittstelleneinrichtung 2 ist ferner mit einer Systemuhr 8 und mit einem Fahrzeugbus 7 gekoppelt. Über den Fahrzeugbus 7 ist die Benutzerschnittstelleneinrichtung 2 mit Fahrerassistenzsystemen des Fahrzeugs verbunden. Die Benutzerschnittstelleneinrichtung 2 erhält über den Fahrzeugbus 7 Daten dieser Fahrerassistenzsysteme und bereitet die so auf, dass diese Daten dem Fahrer bzw. den Fahrzeuginsassen über das Display 1 grafisch dargestellt werden. Die Benutzerschnittstelleneinrichtung 2 erzeugt hierfür Grafikdaten für auf dem Display 1 darstellbare Objekte, welche unter anderem die Informationen der Fahrerassistenzsysteme grafisch darstellen. Ferner ist die Benutzerschnittstelleneinrichtung 2 über den Fahrzeugbus 7 mit verschiedenen Informations- und Kommunikations- sowie Unterhaltungseinrichtungen des Fahrzeugs verbunden. Die vielfältigen Informationen dieser Einrichtungen des Fahrzeugs werden in der Benutzerschnittstelleneinrichtung 2 aufbereitet und in Grafikdaten für eine grafische Darstellung umgewandelt. Für Animationen der grafischen Darstellung auf dem Display umfasst die Benutzerschnittstelleneinrichtung eine Recheneinheit 3, welche beim Erzeugen von Zwischenbildern auf die Systemuhr 8 zurückgreift.

Im Folgenden wird die Informationsanzeige in dem Fahrzeug auf dem Display 1 im Detail erläutert:

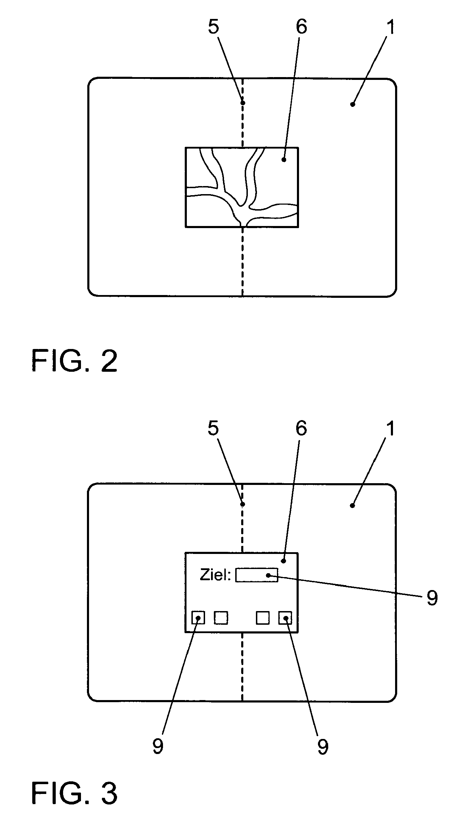

Bei dem von dem Display 1 angezeigten Objekt 6 handelt es sich um die grafische Darstellung einer rechteckigen Fläche, welche auf der Vorderseite ein Anzeigefeld und auf der Rückseite ein Bedienfeld umfasst. In Figur 2 ist eine Ansicht des Displays 1 gezeigt, bei dem das Anzeigefeld des grafischen Objekts 6 sichtbar ist, in Figur 3 ist eine Ansicht des Displays 1 gezeigt, bei dem das Bedienfeld des grafischen Objekts 6 sichtbar ist. Das Objekt dieses Ausführungsbeispiels betrifft das Navigationssystem des Fahrzeugs. In diesem Fall wird im Anzeigefeld beispielsweise eine geografische Karte dargestellt. Es werden im Anzeigefeld insbesondere kleine Schaltflächen dargestellt, die mit Bedienschritten in Zusammenhang stehen. Im Bedienfeld werden hingegen verschiedene Schaltflächen 9 dargestellt, mit welchen über die Eingabeeinrichtung 4 das Navigationssystem bedient werden kann. Insbesondere kann über das Bedienfeld ein Ziel für das Navigationssystem eingegeben werden.

Um von der in der in Figur 2 gezeigten Ansicht zu der in Figur 3 gezeigten Ansicht zu gelangen, kann auf eine Eingabe mittels der Eingabeeinrichtung 4 das grafische Objekt von einer Seite zu der anderen Seite um die Achse 5 gedreht werden. Die Achse 5 ist vertikal, d. h. in Richtung der Höhe des Displays 1 ausgerichtet. Sie schneidet das grafische Objekt 6 bevorzugt mittig. Die Drehung des grafischen Objekts 6 wird perspektivisch dargestellt, so dass bei dieser Animation die Bildpunkte des grafischen Objekts 6 horizontal, d. h. in Richtung der Breite des Displays 1 verschoben werden. Der Verschiebung eines Bildpunktes des grafischen Objekts entspricht somit ein Drehwinkel des perspektivisch dargestellten grafischen Objekts 6. Die folgenden Beschreibungen beziehen sich auf die Positionen der Bildpunkte des grafischen Objekts 6 in horizontaler Richtung. Diese Positionen können ohne weiteres auch in Drehwinkel umgerechnet werden.

Bei dem vorstehend beschriebenen Verfahren zum Drehen des grafischen Objekts 6 ist der Übergang zwischen zwei statischen Darstellungen auf dem Display 1, bei denen die Vorder- bzw. Rückseite des Objekts 6 gezeigt werden, von besonderer Bedeutung. Da die Anzeigeeinrichtung nämlich in einem Kraftfahrzeug untergebracht ist, ist es besonders wichtig, dass insbesondere der Fahrer des Kraftfahrzeugs die auf dem Display 1 dargestellten Informationen schnell, einfach und intuitiv erfassen kann, selbst wenn er nur für kurze Zeitintervalle seinen Blick auf das Display 1 richtet. Dabei ist es besonders wichtig, dass der Betrachter jederzeit gut zwischen einem Anzeigefeld und einem Bedienfeld unterscheiden kann. Es hat sich ergeben, dass abrupte Wechsel von Anzeigebildern hierfür nachteilhaft sind. Es hat sich insbesondere herausgestellt, dass fließende Übergänge zwischen zwei statischen Darstellungen, bei denen Zwischenbilder angezeigt werden, welche den Übergang zwischen den zwei statischen Darstellungen verdeutlichen, die Orientierung in der Struktur sowie die Erfassbarkeit des Informationsinhalts erleichtern.

Ferner ist besonders wichtig, wie die Zwischenbilder den Übergang zwischen zwei statischen Darstellungen visualisieren. Dabei hat sich herausgestellt, dass ein linearer Übergang von einer statischen Darstellung zur nächsten statischen Darstellung bei der Anwendung in einem Kraftfahrzeug nicht geeignet ist. Vielmehr sind Zwischenbilder, welche eine Bewegung der Objekte 6 veranschaulichen, die beschleunigt und abgebremst wird, von Vorteil. Auch sind die Parameter für die Wahl der Beschleunigung und die Dauer des Übergangs an die Anwendung im Fahrzeug anzupassen, so dass herkömmliche, aus dem Computerbereich bekannte Animationen zumeist nicht verwendbar sind.

Im Folgenden wird im Detail beschrieben, wie das grafische Objekte 6 gedreht wird:

Die Drehung des grafischen Objekts 6 wird in zwei Phasen unterteilt. Bei der ersten Phase wird das Objekt 6 von einer in Figur 2 gezeigten Ausgangsstellung um 90° in eine Neutralstellung gedreht, bei welcher nur noch die seitliche Stirnfläche des grafischen Objekts sichtbar ist. In einer zweiten Phase wird das grafische Objekt weiter bis zu einem Drehwinkel von 180° gedreht, bis die andere in Figur 3 gezeigte Seite des grafischen Objekts 6 sichtbar ist. Während der Drehung wird weiterhin die jeweils sichtbare Seite des grafischen Objekts 6 auf der jeweiligen Fläche perspektivisch dargestellt. Die perspektivische Darstellung der Drehung kann entweder so erfolgen, dass der Betrachter direkt auf das grafische Objekt 6 schaut, d. h. die Betrachtungsstrecke parallel zur virtuellen Normalen des grafischen Objekts 6 verläuft. Ferner kann die perspektivische Darstellung so erfolgen, dass der Betrachter das grafische Objekt 6 virtuell von schräg oben betrachtet. Im Folgenden wird angenommen, dass der Betrachter senkrecht auf die mit Figuren 2 und 3 gezeigten Flächen des grafischen Objekts 6 schaut, so dass die perspektivische Darstellung des grafischen Objekts 6 in der ersten Phase zu einer kleiner werdenden Fläche des grafischen Objekts 6 führt, und in der zweiten Phase zu einer größer werdenden Fläche des grafischen Objekts 6. Nimmt man beispielsweise an, dass die Breite des grafischen Objekts 6 800 Bildpunkte des Displays 1 einnimmt, und bezeichnet man die Punkte am linken Rand des grafischen Objekts 6 mit 0, wandern die Bildpunkte des linken Rands des grafischen Objekts 6 bei der Bewegung zunächst in der ersten Phase bis zum Bildpunkt 400 in der Mitte des grafischen Objekts 6 und von dort bis zum Bildpunkt 800 am rechten Rand des grafischen Objekts 6. Der Bildpunkt 0 entspricht somit einem Drehwinkel von 0°, der Bildpunkt 400 einem Drehwinkel von 90° und der Bildpunkt 800 einem Drehwinkel von 180°.

Die Drehung des grafischen Objekts 6 wird durch aufeinander folgende Zwischenbilder dargestellt, die aufeinander folgende Positionen der Bildpunkte des grafischen Objekts 6 anzeigen. Bei der Berechnung der Grafikdaten für diese Positionen x werden in der ersten Phase folgende Rechenschritte durchgeführt:

$$(i) \qquad n = \frac{t - t_0}{d_1} \qquad ;$$

$$(ii) \qquad x = b_1 + c_1 \cdot n^4 \qquad ,$$

wobei

t eine Systemzeit ist, zu der die erzeugten Grafikdaten auf dem Display 1 dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts 6 ist,
$c_1$ die gesamte Verschiebung des Bildpunkts des grafischen Objekts 6 in der ersten Phase ist und wobei die Schritte (i) und (ii) so oft wiederholt werden, bis $t > (t_0 + d_1)$.

Für die zweite Phase werden folgende Rechenschritte durchgeführt:

$$(i) \qquad n = \frac{t - t_0}{d_1} - 1 \qquad ;$$

$$(ii) \qquad x = b_2 + c_2 \cdot (1 - n^4) \qquad ,$$

wobei

t eine Systemzeit ist, zu der die erzeugten Grafikdaten auf dem Display 1 dargestellt werden, wobei zu Beginn der Drehung der zweiten Phase $t = t_0$ ist,
$d_2$ die Dauer der zweiten Phase ist,
$b_2$ die Ausgangsposition des Bildpunkts des grafischen Objekts 6 ist,
$c_2$ die Gesamtverschiebung des Bildpunkts des grafischen Objekts 6 in der zweiten Phase ist und
wobei die Schritte (i) und (ii) so oft wiederholt werden, bis gilt: $t > (t_0 + d_2)$.

Die Rechenschritte werden von der Recheneinheit 3 der Benutzerschnittstelleneinrichtung 2 ausgeführt, wobei der Recheneinheit 3 von der Systemuhr 8 die Systemzeit t übertragen wird.

Die Dauer $d_1$ der Drehung der ersten Phase ist in einem Bereich von 0,25 Sekunden bis 1 Sekunde, insbesondere in einem Bereich von 0,5 Sekunden bis 0,75 Sekunden. Gleichermaßen ist die Dauer der Drehung der zweiten Phase in einem Bereich von 0,25 Sekunden bis 1 Sekunde, insbesondere in einem Bereich von 0,5 Sekunden bis 0,75 Sekunden.

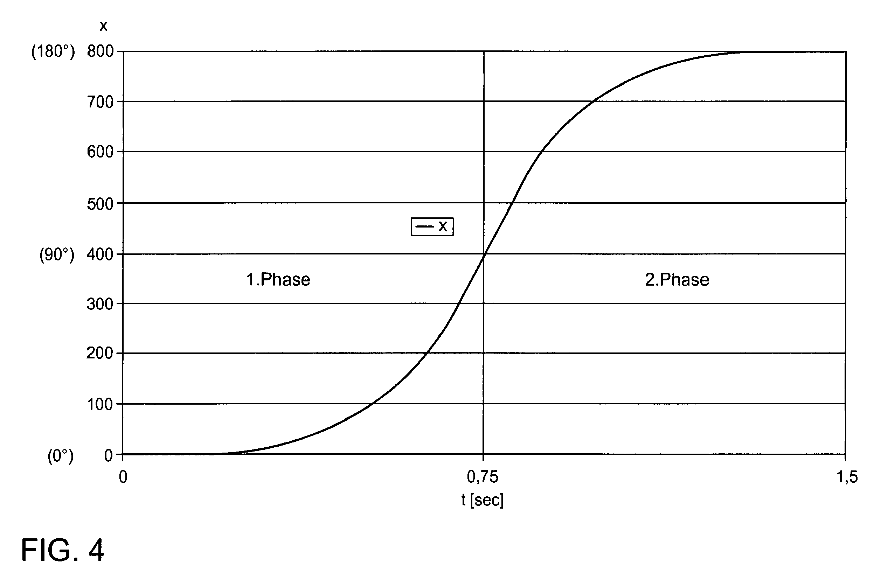

In Figur 4 ist der zeitliche Verlauf eines Bildpunktes während der Drehung um 180° gezeigt. Der Bildpunkt des linken Randes des grafischen Objekts 6 wandert von der Position 0 über die Neutralstellung bei der Position 400 bis zum rechten Rand des grafischen Objekts 6 beim Bildpunkt 800. Wie aus Figur 4 ersichtlich, wird der Bildpunkt in der ersten Phase beschleunigt und in der zweiten Phase abgebremst. Die Dauer der Drehung betrug dabei für jede Phase 0,75 Sekunden, so dass die Drehung um 180° in 1,5 Sekunden ausgeführt wurde.

Gemäß einer Weiterbildung des Ausführungsbeispiels werden in der Benutzerschnittstelleneinrichtung 2 und damit der Recheneinheit 3 über den Fahrzeugbus 7 die Daten des Geschwindigkeitsmessers des Kraftfahrzeugs übertragen. Diese Daten werden von der Recheneinheit 3 verwendet, um die Dauer der Drehung für die beiden Phasen zu ermitteln. Dabei ist die Dauer der Gesamtdrehung umso länger, je höher die Geschwindigkeit des Kraftfahrzeugs ist.

BEZUGSZEICHENLISTE

1 Display
2 Benutzerschnittstelleneinrichtung
3 Recheneinheit
4 Eingabeeinrichtung
5 Drehachse
6 Objekt
7 Fahrzeugbus
8 Systemuhr
9 Schaltflächen

**Patentansprüche**

1. Verfahren zum Anzeigen von Informationen in einem Kraftfahrzeug, bei dem

   - zumindest ein flächiges Objekt (6) mittels eines in dem Kraftfahrzeug befestigten Displays (1) grafisch dargestellt wird, wobei das grafische Objekt (6) ein Anzeigefeld und ein Bedienfeld umfasst,
   **dadurch gekennzeichnet,**
   - **dass** von einer Benutzerschnittstelleneinrichtung (2) Grafikdaten erzeugt werden, die das Display (1) so ansteuern, dass das Anzeigefeld auf einer Seite des flächigen grafischen Objekts (6) und das Bedienfeld auf der anderen Seite des flächigen grafischen Objekts (6) dargestellt werden, und
   - **dass** auf eine Eingabe mittels einer Eingabeeinrichtung (4) eine Recheneinheit (3) der Benutzerschnittstelleneinrichtung (2) die Grafikdaten so verändert, dass sich das grafische Objekt bei der perspektivischen Darstellung auf dem Display (1) von einer Seite zu der anderen Seite dreht.

2. Verfahren nach Anspruch 1,
   **dadurch gekennzeichnet,**
   **dass** die Recheneinheit (3) der Benutzerschnittstelleneinrichtung (2) Grafikdaten für aufeinander folgende Zwischenbilder zur Darstellung der Drehung erzeugt, wobei die Drehung in eine erste Phase, bei der Bildpunkte des grafischen Objekts (6) beschleunigt bewegt werden, und eine zweite Phase, bei der Bildpunkte des grafischen Objekts abgebremst bewegt werden, unterteilt wird.

3. Verfahren nach Anspruch 2,
   **dadurch gekennzeichnet,**
   **dass** die erste Phase einem Drehwinkel des grafischen Objekts (6) von 0° bis 90° entspricht und die zweite Phase einem Drehwinkel des grafischen Objekts (6) von 90° bis 180° entspricht.

4. Verfahren nach einem der vorstehenden Ansprüche,
   **dadurch gekennzeichnet,**
   **dass** die Achse (5) der Drehung innerhalb des grafischen Objekts (6) liegt.

**5.** Verfahren nach einem der Ansprüche 2 bis 4,
**dadurch gekennzeichnet,**
**dass** bei der Berechnung der Grafikdaten für aufeinander folgende Zwischenbilder zur Darstellung der Drehung die aufeinander folgenden Positionen x der Bildpunkte des Objekts (6) in der ersten Phase folgende Rechenschritte durchgeführt werden:

$$\text{(i)} \qquad n = \frac{t - t_0}{d_1} \qquad ;$$

$$\text{(ii)} \qquad x = b_1 + c_1 \cdot n^4 \qquad ,$$

wobei

t eine Systemzeit ist, zu der die erzeugten Grafikdaten auf dem Display (1) dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts (6) ist,
$c_1$ die gesamte Verschiebung des Bildpunkts des grafischen Objekts (6) in der ersten Phase ist und wobei die Schritte (i) und (ii) so oft wiederholt werden, bis gilt: $t > (t_0 + d_1)$.

**6.** Verfahren nach einem der Ansprüche 2 bis 4,
**dadurch gekennzeichnet,**
**dass** bei der Berechnung der Grafikdaten für aufeinander folgende Zwischenbilder zur Darstellung der Drehung, die aufeinander folgenden Positionen x der Bildpunkte des Objekts (6), in der zweiten Phase folgende Rechenschritte durchgeführt werden:

$$\text{(i)} \qquad n = \frac{t - t_0}{d_1} - 1 \qquad ;$$

$$\text{(ii)} \qquad x = b_2 + c_2 \cdot (1 - n^4) \qquad ,$$

wobei

t eine Systemzeit ist, zu der die erzeugten Grafikdaten auf dem Display (1) dargestellt werden, wobei zu Beginn der Drehung der zweiten Phase $t = t_0$ ist,
$d_2$ die Dauer der zweiten Phase ist,
$b_2$ die Ausgangsposition des Bildpunkts des grafischen Objekts (6) ist,
$c_2$ die Gesamtverschiebung des Bildpunkts des grafischen Objekts (6) in der zweiten Phase ist und wobei die Schritte (i) und (ii) von der Recheneinheit so oft wiederholt werden, bis gilt: $t > (t_0 + d_2)$.

**7.** Verfahren nach einem der Ansprüche 2 bis 6,
**dadurch gekennzeichnet,**
**dass** die Dauer der Drehung der ersten Phase in einem Bereich von 0,25 Sekunden bis 1 Sekunde ist, insbesondere in einem Bereich von 0,5 Sekunden bis 0,75 Sekunden.

**8.** Verfahren nach einem der Ansprüche 2 bis 7,
**dadurch gekennzeichnet,**
**dass** die Dauer der Drehung der zweiten Phase in einem Bereich von 0,25 Sekunden bis 1 Sekunde ist, insbesondere in einem Bereich von 0,5 Sekunden bis 0,75 Sekunden.

9. Verfahren nach einem der Ansprüche 2 bis 8,
**dadurch gekennzeichnet,**
**dass** die Geschwindigkeit des Kraftfahrzeugs gemessen wird, und dass die Dauer der Gesamtdrehung und/oder die Dauer der Drehung der ersten und/oder zweiten Phase in Abhängigkeit von der Geschwindigkeit des Kraftfahrzeugs ermittelt wird.

10. Anzeigeeinrichtung für ein Kraftfahrzeug mit,

   - einem Display (1) zur grafischen Darstellung von Informationen, das in dem Kraftfahrzeug befestigt ist,
   - einer Benutzerschnittstelleneinrichtung (2), mit welcher zumindest ein auf dem Display (1) darstellbares flächiges grafisches Objekt (6) erzeugbar ist, wobei das grafische Objekt (6) ein Anzeigefeld und ein Bedienfeld umfasst, und
   - einer mit der Benutzerschnittstelleneinrichtung (2) gekoppelten Eingabeeinrichtung (4),
   **dadurch gekennzeichnet, dass**
   - von der Benutzerschnittstelleneinrichtung (2) Grafikdaten erzeugbar sind, die das Display (1) so ansteuern, dass das Anzeigefeld auf einer Seite des flächigen grafischen Objekts (6) und das Bedienfeld auf der anderen Seite des flächigen grafischen Objekts (6) dargestellt sind, und
   - die Benutzerschnittstelleneinrichtung (2) eine Recheneinheit (3) umfasst, mit welcher in Abhängigkeit von einer Eingabe mittels der Eingabeeinrichtung (4) die Grafikdaten so veränderbar sind, dass sich das flächige grafische Objekt bei der perspektivischen Darstellung auf dem Display (1) von einer Seite zu der anderen Seite dreht.

11. Anzeigeeinrichtung nach Anspruch 10,
**dadurch gekennzeichnet,**
**dass** mit der Recheneinheit (3) der Benutzerschnittstelleneinrichtung (2) Grafikdaten für aufeinander folgende Zwischenbilder zur Darstellung der Drehung erzeugbar sind, wobei die Drehung in eine erste Phase, bei der Bildpunkte des grafischen Objekts (6) beschleunigt bewegt werden, und eine zweite Phase, bei der Bildpunkte des grafischen Objekts (6) abgebremst bewegt werden, unterteilt ist.

12. Anzeigeeinrichtung nach Anspruch 10 oder 11,
**dadurch gekennzeichnet,**
**dass** bei der Berechnung der Grafikdaten für aufeinander folgende Zwischenbilder zur Darstellung der Drehung die aufeinander folgenden Positionen x der Bildpunkte des grafischen Objekts (6) in der ersten Phase von der Recheneinheit (3) folgende Rechenschritte durchführbar sind:

$$(i) \qquad n = \frac{t - t_0}{d_1} \qquad ;$$

$$(ii) \qquad x = b_1 + c_1 \cdot n^4 \qquad ,$$

wobei

t eine Systemzeit ist, zu der die erzeugten Grafikdaten auf dem Display (1) dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts (6) ist,
$c_1$ die gesamte Verschiebung des Bildpunkts des grafischen Objekts (6) in der ersten Phase ist und
wobei die Schritte (i) und (ii) von der Recheneinheit (3) so oft wiederholt werden, bis gilt: $t > (t_0 + d_1)$.

13. Anzeigeeinrichtung nach Anspruch 10 oder 11,

**dadurch gekennzeichnet,**
**dass** bei der Berechnung der Grafikdaten für aufeinander folgende Zwischenbilder zur Darstellung der Drehung die aufeinander folgenden Positionen x der Bildpunkte des grafischen Objekts (6) in der zweiten Phase von der Recheneinheit (3) folgende Rechenschritte durchführbar sind:

$$(i) \qquad n = \frac{t - t_0}{d_1} - 1 \qquad ;$$

$$(ii) \qquad x = b_2 + c_2 \cdot (1 - n^4) \qquad ,$$

wobei

t eine Systemzeit ist, zu der die erzeugten Grafikdaten auf dem Display (1) dargestellt werden, wobei zu Beginn der Drehung der zweiten Phase $t = t_0$ ist,
$d_2$ die Dauer der zweiten Phase ist,
$b_2$ die Ausgangsposition des Bildpunkts des grafischen Objekts (6) ist,
$c_2$ die Gesamtverschiebung des Bildpunkts des grafischen Objekts (6) in der zweiten Phase ist und
wobei die Schritte (i) und (ii) von der Recheneinheit (3) so oft wiederholt werden, bis gilt: $t > (t_0 + d_2)$.

14. Anzeigeeinrichtung nach einem der Ansprüche 10 bis 13,
**dadurch gekennzeichnet,**
**dass** die Anzeigeeinrichtung eine Schnittstelle zum Empfang von Daten für die Geschwindigkeit des Kraftfahrzeugs umfasst und dass mit der Recheneinheit (3) in Abhängigkeit von diesen Geschwindigkeitsdaten die Dauer der Gesamtdrehung und/oder die Dauer der Drehung ermittelbar ist.

15. Kraftfahrzeug mit einer Anzeigeeinrichtung nach einem der Ansprüche 10 bis 14.

**Claims**

1. Method for displaying information in a motor vehicle, in the case of which

- at least one flat object (6) is graphically displayed by means of a display (1) fastened in the motor vehicle, the graphic object (6) comprising a display field and an operating field,
**characterized**
- **in that** a user interface device (2) is used to generate graphic data which drive the display (1) such that the display field is displayed on one side of the flat graphic object (6), and the operating field is displayed on the other side of the flat graphic object (6), and
- **in that** in response to an input by means of an input device (4) a central processor (3) of the user interface device (2) changes the graphic data such that upon being displayed in perspective the graphic object rotates on the display (1) from one side to the other side.

2. Method according to Claim 1, **characterized in that** the central processor (3) of the user interface device (2) generates graphic data for consecutive intermediate images in order to display the rotation, the rotation being subdivided into a first phase in which the pixels of the graphic object (6) are moved with acceleration, and a second phase in which the pixels of the graphic object are moved with retardation.

3. Method according to Claim 2, **characterized in that** the first phase corresponds to a rotation angle of the graphic object (6) of from 0° to 90°, and the second phase corresponds to a rotation angle of the graphic object (6) of from 90° to 180°.

4. Method according to one of the preceding claims, **characterized in that** the axis (5) of the rotation lies inside the graphic object (6).

5. Method according to one of Claims 2 to 4, **characterized in that**, when calculating the graphic data for consecutive intermediate images in order to display the rotation by the consecutive positions x of the pixels of the object (6), the following computing steps are carried out in the first phase:

$$\text{(i)} \qquad n = \frac{t - t_0}{d_1} \quad ;$$

$$\text{(ii)} \qquad x = b_1 + c_1 \cdot n^4 \quad ,$$

t being a system time at which the generated graphic data are displayed on the display (1), t = to at the beginning of the rotation of the first phase,
$d_1$ being the duration of the first phase,
$b_1$ being the initial position of the pixel of the graphic object (6),
$c_1$ being the total displacement of the pixel of the graphic object (6) in the first phase, and
the steps (i) and (ii) being repeated until it holds that:

$$t > (t_0 + d_1).$$

6. Method according to one of Claims 2 to 4, **characterized in that**, when calculating the graphic data for consecutive intermediate images in order to display the rotation by the consecutive positions x of the pixels of the object (6), the following computing steps are carried out in the second phase:

$$\text{(i)} \qquad n = \frac{t - t_0}{d_1} - 1 \quad ;$$

$$\text{(ii)} \qquad x = b_2 + c_2 \cdot (1 - n^4) \quad ,$$

t being a system time at which the generated graphic data are displayed on the display (1), t = $t_0$ at the beginning of the rotation of the second phase,
$d_2$ being the duration of the second phase,
$b_2$ being the initial position of the pixel of the graphic object (6),
$c_2$ being the total displacement of the pixel of the graphic object (6) in the second phase, and
the steps (i) and (ii) being repeated by the central process or until it holds that:

$$t > (t_0 + d_2).$$

7. Method according to one of Claims 2 to 6, **characterized in that** the duration of the rotation of the first phase is in the range from 0.25 seconds to 1 second, in particular in the range from 0.5 seconds to 0.75 seconds.

8. Method according to one of Claims 2 to 7, **characterized in that** the duration of the rotation of the second phase is in the range from 0.25 seconds to 1 second, in particular in the range from 0.5 seconds to 0.75 seconds.

9. Method according to one of Claims 2 to 8, **characterized in that** the speed of the motor vehicle is measured, and

in that the duration of the total rotation, and/or the duration of the rotation of the first and/or second phase(s) is determined as a function of the speed of the motor vehicle.

**10.** Display device for a motor vehicle, having

- a display (1) for graphically displaying information, which is fastened in the motor vehicle,
- a user interface device (2) with which at least one flat graphic object (6) that can be displayed on the display (1) can be generated, the graphic object (6) comprising a display field and an operating field, and
- an input device (4) coupled to the user interface device (2),
**characterized**
- **in that** the user interface device (2) can be used to generate graphic data which drive the display (1) such that the display field is displayed on one side of the flat graphic object (6), and the operating field is displayed on the other side of the flat graphic object (6), and
- **in that** the user interface device (2) comprises a central processor (3) with the aid of which it is possible as a function of an input by means of the input device (4) to change the graphic data such that upon being displayed in perspective the flat graphic object rotates on the display (1) from one side to the other side.

**11.** Display device according to Claim 10, **characterized in that** the central processor (3) of the user interface device (2) can generate graphic data for consecutive intermediate images in order to display the rotation, the rotation being subdivided into a first phase in which the pixels of the graphic object (6) are moved with acceleration, and a second phase in which the pixels of the graphic object (6) are moved with retardation.

**12.** Display device according to Claim 10 or 11, **characterized in that**, when calculating the graphic data for consecutive intermediate images in order to display the rotation by the consecutive positions x of the pixels of the graphic object (6), the following computing steps can be carried out by the central processor (3) in the first phase:

$$\text{(i)} \qquad n = \frac{t - t_0}{d_1} \qquad ;$$

$$\text{(ii)} \qquad x = b_1 + c_1 \cdot n^4 \qquad ,$$

t being a system time at which the generated graphic data are displayed on the display (1), $t = t_0$ at the beginning of the rotation of the first phase,
$d_1$ being the duration of the first phase,
$b_1$ being the initial position of the pixel of the graphic object (6),
$c_1$ being the total displacement of the pixel of the graphic object (6) in the first phase, and
the steps (i) and (ii) being repeated by the central processor (3) until it holds that: $t > (t_0 + d_1)$.

**13.** Display device according to Claim 10 or 11, **characterized in that**, when calculating the graphic data for consecutive intermediate images in order to display the rotation by the consecutive positions x of the pixels of the graphic object (6), the following computing steps can be carried out by the central processor (3) in the second phase:

$$\text{(i)} \qquad n = \frac{t - t_0}{d_1} - 1 \qquad ;$$

$$\text{(ii)} \qquad x = b_2 + c_2 \cdot (1 - n^4) \qquad ,$$

t being a system time at which the generated graphic data are displayed on the display (1), $t = t_0$ at the beginning of the rotation of the second phase,

$d_2$ being the duration of the second phase,

$b_2$ being the initial position of the pixel of the graphic object (6),

$c_2$ being the total displacement of the pixel of the graphic object (6) in the second phase, and

the steps (i) and (ii) being repeated by the central processor (3) until it holds that: $t > (t_0 + d_2)$.

14. Display device according to one of Claims 10 to 13, **characterized in that** the display device comprises an interface for receiving data on the speed of the motor vehicle, and **in that** the central processor (3) can be used to determine the duration of the total rotation and/or the duration of the rotation as a function of these speed data.

15. Motor vehicle with a display device according to one of Claims 10 to 14.

**Revendications**

1. Procédé pour afficher des informations dans un véhicule automobile, selon lequel

- au moins un objet plan (6) est représenté graphiquement au moyen d'un écran (1) fixé dans le véhicule automobile, l'objet (6) graphique comprenant une zone d'affichage et une zone de commande, **caractérisé en ce**
- **que** des données graphiques sont générées par un dispositif d'interface utilisateur (2), lesquelles commandent l'écran (1) de telle sorte que la zone d'affichage est représentée d'un côté de l'objet graphique plan (6) et la zone de commande de l'autre côté de l'objet graphique plan (6), et
- **que** les données graphiques sont modifiées sur une saisie au moyen d'un dispositif de saisie (4) d'une unité de calcul (3) du dispositif d'interface utilisateur (2) de telle sorte que l'objet graphique se tourne d'un côté à l'autre lors de la représentation en perspective sur l'écran (1).

2. Procédé selon la revendication 1, **caractérisé en ce que** l'unité de calcul (3) du dispositif d'interface utilisateur (2) génère des données graphiques pour des images intermédiaires successives en vue de la représentation de la rotation, la rotation étant divisée en une première phase au cours de laquelle les pixels de l'objet graphique (6) sont déplacés avec accélération et une deuxième phase au cours de laquelle les pixels de l'objet graphique sont déplacés avec freinage.

3. Procédé selon la revendication 2, **caractérisé en ce que** la première phase correspond à un angle de rotation de l'objet graphique (6) de 0° à 90° et la deuxième phase à un angle de rotation de l'objet graphique (6) de 90° à 180°.

4. Procédé selon l'une des revendications précédentes, **caractérisé en ce que** l'axe (5) de rotation se trouve à l'intérieur de l'objet graphique (6).

5. Procédé selon l'une des revendications 2 à 4, **caractérisé en ce que** lors du calcul des données graphiques pour des images intermédiaires successives en vue de la représentation de la rotation par les positions successives x des pixels de l'objet (6) dans la première phase, les étapes de calcul suivantes sont effectuées :

$$\text{(i)} \qquad n = \frac{t - t_0}{d_1} \; ;$$

$$\text{(ii)} \qquad x = b_1 + c_1 \cdot n^4,$$

où

$t$ désigne un temps système auquel les données graphiques générées sont représentées sur l'écran (1), avec $t = t_0$ au début de la rotation de la première phase,

$d_1$ désigne la durée de la première phase,

$b_1$ désigne la position initiale du pixel de l'objet graphique (6),

$c_1$ désigne le décalage total du pixel de l'objet graphique (6) dans la première phase et

les étapes (i) et (ii) étant répétées jusqu'à ce que l'équation suivante soit vérifiée :

$$t > (t_0 + d_1).$$

6. Procédé selon l'une des revendications 2 à 4, **caractérisé en ce que** lors du calcul des données graphiques pour des images intermédiaires successives en vue de la représentation de la rotation par les positions successives x des pixels de l'objet (6) dans la deuxième phase, les étapes de calcul suivantes sont effectuées :

$$(i) \qquad n = \frac{t - t_0}{d_1} \; ;$$

$$(ii) \qquad x = b_2 + c_2 \; . \; (1 - n^4),$$

où

t désigne un temps système auquel les données graphiques générées sont représentées sur l'écran (1), avec $t = t_0$ au début de la rotation de la deuxième phase,
$d_2$ désigne la durée de la deuxième phase,
$b_2$ désigne la position initiale du pixel de l'objet graphique (6),
$c_2$ désigne le décalage total du pixel de l'objet graphique (6) dans la deuxième phase et
les étapes (i) et (ii) étant répétées par l'unité de calcul jusqu'à ce que l'équation suivante soit vérifiés :

$$t > (t_0 + d_2).$$

7. Procédé selon l'une des revendications 2 à 6, **caractérisé en ce que** la durée de la rotation de la première phase est comprise dans une plage de 0,25 seconde à 1 seconde, notamment dans une plage de 0,5 seconde à 0,75 seconde.

8. Procédé selon l'une des revendications 2 à 7, **caractérisé en ce que** la durée de la rotation de la deuxième phase est comprise dans une plage de 0,25 seconde à 1 seconde, notamment dans une plage de 0,5 seconde à 0,75 seconde.

9. Procédé selon l'une des revendications 2 à 8, **caractérisé en ce que** la vitesse du véhicule automobile est mesurée et que la durée de la rotation totale et/ou la durée de la rotation de la première et/ou de la deuxième phase est/sont déterminée(s) en fonction de la vitesse du véhicule automobile.

10. Dispositif d'affichage pour un véhicule automobile, comprenant :

- un écran (1) pour la représentation graphique d'informations, lequel est fixé dans le véhicule automobile,
- un dispositif d'interface utilisateur (2) avec lequel peut être généré au moins un objet graphique plan (6) pouvant être représenté sur l'écran (1), l'objet (6) graphique comprenant une zone d'affichage et une zone de commande, et
- un dispositif de saisie (4) connecté au dispositif d'interface utilisateur (2),
**caractérisé en ce**
- **que** des données graphiques peuvent être générées par le dispositif d'interface utilisateur (2), lesquelles commandent l'écran (1) de telle sorte que la zone d'affichage est représentée d'un côté de l'objet graphique plan (6) et la zone de commande de l'autre côté de l'objet graphique plan (6), et
- **que** le dispositif d'interface utilisateur (2) comprend une unité de calcul (3) avec laquelle les données graphiques peuvent être modifiées en fonction d'une saisie au moyen du dispositif de saisie (4) de telle sorte que l'objet graphique plan se tourne d'un côté à l'autre lors de la représentation en perspective sur l'écran (1).

11. Dispositif d'affichage selon la revendication 10, **caractérisé en ce que** des données graphiques pour des images intermédiaires successives en vue de la représentation de la rotation peuvent être générées avec l'unité de calcul (3) du dispositif d'interface utilisateur (2), la rotation étant divisée en une première phase au cours de laquelle les pixels de l'objet graphique (6) sont déplacés avec accélération et une deuxième phase au cours de laquelle les pixels de l'objet graphique (6) sont déplacés avec freinage.

**12.** Dispositif d'affichage selon la revendication 10 ou 11, **caractérisé en ce que** lors du calcul des données graphiques pour des images intermédiaires successives en vue de la représentation de la rotation par les positions successives x des pixels de l'objet graphique (6) dans la première phase, les étapes de calcul suivantes peuvent être effectuées par l'unité de calcul (3) :

$$\text{(i)} \qquad n = \frac{t - t_0}{d_1} \; ;$$

$$\text{(ii)} \qquad x = b_1 + c_1 \, . \, n^4,$$

où

t désigne un temps système auquel les données graphiques générées sont représentées sur l'écran (1), avec $t = t_0$ au début de la rotation de la première phase,
$d_1$ désigne la durée de la première phase,
$b_1$ désigne la position initiale du pixel de l'objet graphique (6),
$c_1$ désigne le décalage total du pixel de l'objet graphique (6) dans la première phase et
les étapes (i) et (ii) étant répétées par l'unité de calcul (3) jusqu'à ce que l'équation suivante soit vérifiés :

$$t > (t_0 + d_1).$$

**13.** Dispositif d'affichage selon la revendication 10 ou 11, **caractérisé en ce que** lors du calcul des données graphiques pour des images intermédiaires successives en vue de la représentation de la rotation par les positions successives x des pixels de l'objet graphique (6) dans la deuxième phase, les étapes de calcul suivantes peuvent être effectuées par l'unité de calcul (3) :

$$\text{(i)} \qquad n = \frac{t - t_0}{d_1} \; ;$$

$$\text{(ii)} \qquad x = b_2 + c_2 \, . \, (1 - n^4),$$

où

t désigne un temps système auquel les données graphiques générées sont représentées sur l'écran (1), avec $t = t_0$ au début de la rotation de la deuxième phase,
$d_2$ désigne la durée de la deuxième phase,
$b_2$ désigne la position initiale du pixel de l'objet graphique (6),
$c_2$ désigne le décalage total du pixel de l'objet graphique (6) dans la deuxième phase et
les étapes (i) et (ii) étant répétées par l'unité de calcul (3) jusqu'à ce que l'équation suivante soit vérifiés :

$$t > (t_0 + d_2).$$

**14.** Dispositif d'affichage selon l'une des revendications 10 à 13, **caractérisé en ce que** le dispositif d'affichage comprend une interface pour la réception de données sur la vitesse du véhicule automobile et que la durée de la rotation totale et/ou la durée de la rotation peu(ven)t être déterminée(s) avec l'unité de calcul (3) en fonction de ces données de vitesse.

**15.** Véhicule automobile comprenant un dispositif d'affichage selon l'une des revendications 10 à 14.

FIG. 1

FIG. 2

FIG. 3

FIG. 4

EP 2 181 014 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10001988 A1
- DE 10303792 A1
- DE 19941955 A1
- WO 2006108617 A2
- DE 10058244 C2
- DE 10305341 A1
- DE 102004048956 A1
- EP 1212208 B1